# EUROPEAN PATENT APPLICATION

(11) **EP 3 819 219 A1**
(43) Date of publication of application: **12.05.2021**
(21) Application number: 20200235.8
(22) Date of filing: 06.10.2020
(51) Int. Cl.: B64D 25/14, B63C 9/04

(54) **EVACUATION SYSTEM WITH INTEGRAL RAFT**

(30) Priority: 07.11.2019 US 201916676688
(71) Applicant: Goodrich Corporation, Charlotte, NC 28217-4578 (US)
(72) Inventor: HAYNES, Timothy C., Prescott Valley, AZ 86315 (US); MARQUEZ, Eric A., Phoenix, AZ 85042 (US); LIM, Sophak, Phoenix, AZ 85040 (US)
(74) Representative: Dehns

(57) **Abstract**

An evacuation system may comprise an inflatable slide, a raft compartment (110), and an evacuation raft (120). The evacuation raft (120) may be disposed within the raft compartment (110). The evacuation raft (120) may be configured to deploy in response to a water landing of an aircraft.

## Description

### FIELD

The present disclosure relates to aircraft evacuation systems and, in particular, to an evacuation slide with an integrated life raft.

### BACKGROUND

Emergency evacuation systems, including inflatable evacuation slides, may be used to exit an aircraft absent a jet way or other suitable means of egress for passengers. The evacuation slides may deploy, for example, from the side of an aircraft fuselage. In the event of a water landing, the inflatable evacuation slide may be employed as a life raft.

### SUMMARY

An evacuation slide assembly is disclosed herein. The evacuation slide assembly may comprise: an inflatable slide comprising: a first side tube; a second side tube; a sliding surface disposed between the first side tube and the second side tube and extending from a head end to a toe end of the evacuation slide assembly; a raft compartment coupled to the first side tube; and an evacuation raft disposed within the raft compartment, wherein the evacuation raft is a discrete component from the inflatable slide, and wherein the evacuation raft is configured to deploy adjacent to the inflatable slide.

In various embodiments, the evacuation slide assembly may further comprise a sensor coupled to the toe end of the inflatable slide. The sensor may be configured to complete an electrical connection in response to being submerged in water, the electrical connection configured to inflate the evacuation raft. The evacuation slide assembly may further comprise a raft trigger system coupled to the sensor. The raft trigger system may be configured to activate a reactant packet in response to the sensor being submerged in water. The raft trigger system may be configured to activate a pressure cylinder coupled to the evacuation raft in response to the sensor being submerged in water. The raft compartment may comprise a hollow pouch and a releasable attachment mechanism and the evacuation raft may be configured to release the releasable attachment mechanism during inflation. The evacuation slide assembly may further comprise a cord coupled to the first side tube and the evacuation raft.

An aircraft including an evacuation system is disclosed herein. The evacuation system may comprise: an inflatable slide comprising a raft compartment and a tube, the raft compartment coupled to the tube; and an evacuation raft disposed within the raft compartment, wherein the evacuation raft is a discrete component to the inflatable slide, and wherein the evacuation raft is configured to deploy adjacent to the inflatable slide.

In various embodiments, the raft compartment may comprise a hollow pouch and a releasable attachment mechanism. The evacuation raft may be configured to release the releasable attachment mechanism during inflation of the evacuation raft and eject from the hollow pouch. The evacuation system may further comprise a sensor coupled to a toe end of the inflatable slide, the sensor configured to complete an electrical connection with a raft trigger system in response to the sensor being submerged in water. The evacuation system may further comprise a reactant packet disposed in the evacuation raft. The evacuation system may further comprise a raft pressure cylinder coupled to the evacuation raft. The evacuation system may further comprise a cord, wherein the evacuation raft is coupled to the inflatable slide by the cord. The raft trigger system may be configured to activate a reactant packet disposes within the evacuation raft in response to the sensor being submerged in water.

A method of deploying an evacuation raft from an evacuation slide assembly is disclosed herein. The method may comprise: submerging a water activated sensor into water, the water activated sensor coupled to a toe end of the evacuation slide assembly; activating a raft trigger system in response to submerging the water activated sensor; inflating the evacuation raft coupled to the raft trigger system, the evacuation raft disposed in a raft compartment coupled to an inflatable slide of the evacuation slide assembly.

In various embodiments, inflating the evacuation raft may further comprise activating a reactant packet disposed within the evacuation raft. In various embodiments, inflating the evacuation raft may further comprise activating a raft pressure cylinder coupled to the evacuation raft. The method may further comprise ejecting the evacuation raft out of the raft compartment.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and nonlimiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1A illustrates a perspective view of an aircraft comprising an evacuation system, in accordance with various embodiments;
FIG. 1B illustrates a block diagram of an evacuation system, in accordance with various embodiments;
FIG. 2A illustrates a side view of an evacuation system, in accordance with various embodiments;
FIG. 2B illustrates a cross-sectional view of an evacuation system, in accordance with various embodiments;
FIG. 3 illustrates a perspective view of an evacuation system in a packed configuration, in accordance with various embodiments;
FIG. 4 illustrates a side view of an evacuation system, in accordance with various embodiments;
FIG. 5A illustrates a perspective view of an evacuation system, in accordance with various embodiments;
FIG. 5B illustrates a perspective view of a portion of an evacuation system in accordance with various embodiments; and
FIG. 6 illustrates a method of deploying an evacuation raft from an evacuation slide assembly, in accordance with various embodiments.

Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option.

Throughout the present disclosure, like reference numbers denote like elements. Accordingly, elements with like element numbering may be shown in the figures, but may not be necessarily repeated herein for the sake of clarity. As used herein, "proximate" refers to a direction inward, or generally, towards the reference component.

Evacuation systems of the present disclosure may include an inflatable slide having an integrated life raft. The inflatable slide may comprise a raft compartment and an inflatable raft. The inflatable raft may be disposed in the raft compartment. In various embodiments, the inflatable raft may be in a deflated state upon deployment of the evacuation slide. In various embodiments, the inflatable raft may be configured to transition from a deflated state to an inflated state in the event of an aircraft water landing. An "inflated state" as described herein, is filled with air or fluid (i.e., an expanded state of a tube where pressure is exerted on an internal surface of a tube). A "deflated state," as described herein is a compact state where there is little to no pressure exerted on an internal surface of a tube.

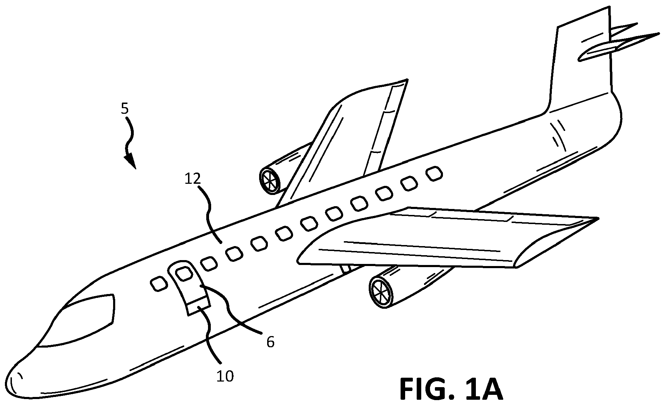

FIG. 1A illustrates a perspective view of an aircraft 5 having an evacuation system compartment 10, in accordance with various embodiments. Aircraft 5 may comprise a fuselage 12 with wings fixed to fuselage 12. An emergency exit door 6 may be disposed on fuselage 12 to allow passengers to exit the aircraft 5. Emergency exit door 6, in various embodiments, may be situated over the wings of the aircraft such that passengers exiting through the emergency exit door 6 can exit onto the wing(s). Emergency exit door 6 may be situated at any suitable location along fuselage 12. In various embodiments, evacuation system compartment 10 may be coupled to emergency exit door 6 and/or fuselage 12 and may be on the inside or outside of aircraft 5. Evacuation system compartment 10 may comprise an evacuation system, which may be deployed in response to opening emergency exit door 6, for example.

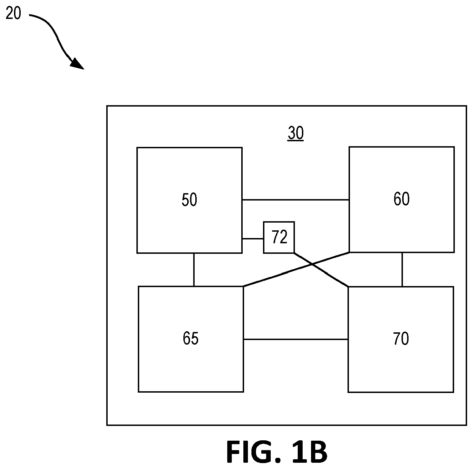

In various embodiments, with reference to FIGS. 1A and 1B, evacuation system compartment 10 may comprise an evacuation system 20. Evacuation system 20 may comprise an evacuation slide 30. Evacuation slide 30 may comprise an evacuation raft 50, a reactant packet 60 (which may comprise various reactant packet stages, i.e., primary, secondary, etc.), a raft trigger system 65, and/or a processor 70. Reactant packet 60 may be coupled to evacuation raft 50. Raft trigger system 65 may be electrically coupled to processor 70 and/or reactant packet 60 in any suitable manner such as an electronic cable or a wireless connection. In various embodiments, processor 70 may be comprised in raft trigger system 65. In various embodiments, evacuation system 20 may comprise a sensor 72. Sensor 72 may be coupled to evacuation slide 50 to measure a parameter of evacuation slide 50 and/or the surrounding environment. Processor 70 may be in electronic communication with sensor 72 and/or evacuation raft 50. Examples of the components of evacuation system 20 will be further explained herein.

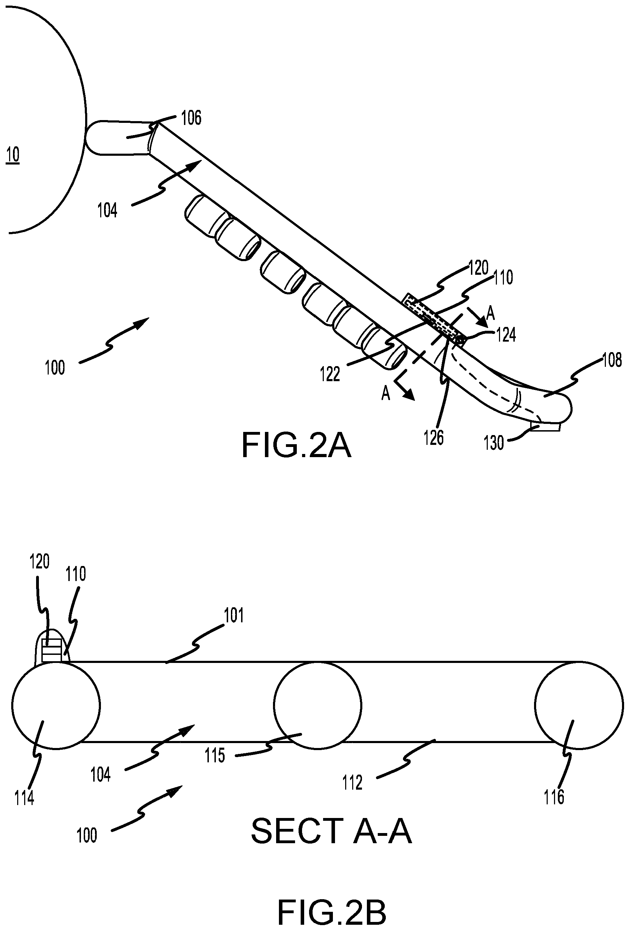

With reference to FIG. 2A, a side view of an evacuation system 100 (an example of evacuation system 20 in FIG. 1B) is illustrated, in accordance with various embodiments. Evacuation system 100 may comprise an evacuation slide assembly 104. Evacuation slide assembly 104 may be deployed from an aircraft 10. Evacuation slide assembly 104 may comprise an inflatable slide. Evacuation slide assembly 104 may comprise a head end 106 and a toe end 108 opposite head end 106. Head end 106 may be coupled to an aircraft 10. Upon deployment, toe end 108 may contact an exit surface (e.g., the ground or the water) in response to evacuation slide assembly 104 being deployed. In the event of a water landing, evacuation slide assembly 104 may be uncoupled from the aircraft structure and serve as a life raft.

Evacuation slide assembly 104 may further comprise a raft compartment 110. The raft compartment 110 may be disposed proximate the toe end 108 of the evacuation slide assembly 104. The evacuation slide assembly 104 may further comprise an evacuation raft 120 disposed in the raft compartment 110.

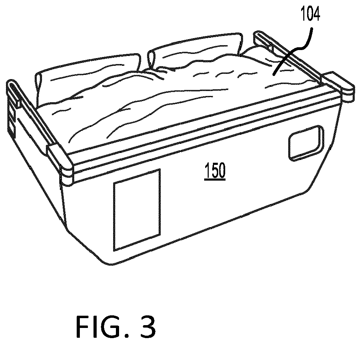

Referring to FIG. 3, evacuation slide assembly 104 is illustrated in a stowed and/or packed position. In this regard, evacuation slide assembly 104 may be stowed in a packboard 150. In various embodiments, evacuation slide assembly 104 may be folded in the stowed position. In various embodiments, evacuation slide assembly 104 may be deployed from packboard 150 in response to opening an emergency exit door. Packboard 150 may be coupled to an aircraft in an installed position. Typically, a packboard 150 opens in response to deployment of evacuation slide assembly 104 and through which the inflatable slide may exit the packboard 150. In this regard, evacuation slide assembly 104 may be configured to be deployed from an aircraft 5 (as shown in FIG. 1A).

Referring now to FIG. 2B, an evacuation system 100 along cross sectional line A-A from FIG. 2A is illustrated, in accordance with various embodiments. With reference to FIGS. 2A and 2B, evacuation slide assembly 104 may comprise a sliding surface 101 and an underside surface 112 opposite sliding surface 101. Sliding surface 101 may extend from head end 106 to toe end 108. Evacuation slide assembly 104 may comprise a first side tube 114, a second side tube 116, and a center tube 115 parallel and disposed between first side tube 114 and second side tube 116. In various embodiments, raft compartment 110 may be coupled to first side tube 114. Although depicted as coupled to first side tube 114, the raft compartment may be disposed anywhere on an evacuation slide assembly 104. First side tube 114 and second side tube 116 may be disposed on opposing sides of evacuation slide assembly 104 and may extend from head end 106 to toe end 108. First side tube 114, second side tube 116, and center tube 115 may be integrally formed and in fluid communication. Stated differently, first side tube 114 and second side tube 116 may be part of a one, interconnected chamber that fills with gas upon deployment of evacuation slide assembly 104.

Evacuation slide assembly 104 may further comprise the evacuation raft 120 disposed within raft compartment 110. The evacuation raft 120 may be in a deflated state upon deployment of the evacuation system. In various embodiments, the evacuation raft 120 is configured to inflate automatically in the event of a water landing. In various embodiments, the evacuation raft 120 is configured to inflate manually and/or in response to releasing the evacuation slide assembly 104 from the aircraft.

With continued reference to FIGS. 2A and 2B, in various embodiments, evacuation system 100 may comprise a reactant packet (e.g., reactant packet 60 in FIG. 1B, or the like), for example reactant packet 122 disposed within evacuation raft 120. Evacuation system 100 may further comprise a raft trigger system 124 (an example of raft trigger system 65 in FIG. 1B) coupled to reactant packet 122. Raft trigger system 124 may be coupled to emergency exit door 6, fuselage 12, the raft compartment 110, and/or any other suitable part of an aircraft or evacuation system 100. In various embodiments, raft trigger system 124 may be coupled to evacuation raft 120. In various embodiments, reactant packet 122 may be electronically coupled to raft trigger system 124 via a wireless connection. In various embodiments, reactant packet 122 may be electronically coupled to raft trigger system 124 via a cable assembly 126. A cable end of cable assembly 126 may be coupled to reactant packet 122.

The evacuation system 100 may further comprise a sensor 130 disposed proximate toe end 108 of evacuation slide assembly 104. In various embodiments, the sensor 130 may be a water activated sensor, or the like. For example, the sensor 130 may be configured to complete an electrical connection upon becoming submerged in water. The electrical connection may activate raft trigger system 124 and cause the evacuation raft 120 to inflate from a deflated state to an inflated state.

In various embodiments, the raft trigger system 124 may activate the reactant packet 122 upon detaching the evacuation slide assembly 104 from the aircraft 10 and inflate from a deflated state to an inflated state. In various embodiments, the reactant packet 122 may activate on a time delay from dethatching the evacuation slide assembly 104 from the aircraft 10 (e.g., a 20 second time delay or a 10 second time delay). In various embodiments, aircraft controls may be in communication with raft trigger system 124, and the raft trigger system 124 may be configured to activate reactant packet 122 upon a control signal from aircraft controls (e.g., a sensor determines the aircraft is in water and activates raft trigger system 124 in response to determining the aircraft is in water).

In various embodiments, reactant packet 122 may comprise a chemically reactive material (e.g., in an enclosing package) configured to react in response to being activated (e.g., ignited) and produce gas as a product of the reaction to an evacuation raft 120. The reaction of the chemically reactive material may be an energetic gas-generating reaction. The chemically reactive material may be a solid material and/or initially gasless (i.e., the chemically reactive material may exist in a solid state yet be configured to react and form a gas that will be used as the primary gas source to inflate the evacuation raft 120).

Additionally, in various embodiments, inflation of the second plurality of tubes may not employ entrainment of ambient air. The chemically reactive material may be any suitable material, such as a material that includes sodium azide. For example, reactant packet 122 may comprise sodium azide, potassium nitrate, and silicon dioxide. In response to being ignited, the sodium azide may form nitrogen gas, which inflates the second plurality of tubes to form the raft configuration, and elemental sodium. The elemental sodium may react in a secondary reaction with the potassium nitrate to form potassium oxide, sodium oxide, and additional nitrogen gas. Finally, a tertiary reaction may take place in which potassium oxide, sodium oxide and silicon dioxide react to form silicate glass (potassium silicate and sodium silicate). This reaction is simply an exemplary reaction of a chemically reactive material to create (nitrogen) gas to inflate the second plurality of tubes and form the raft configuration, as the chemically reactive material may be any suitable material.

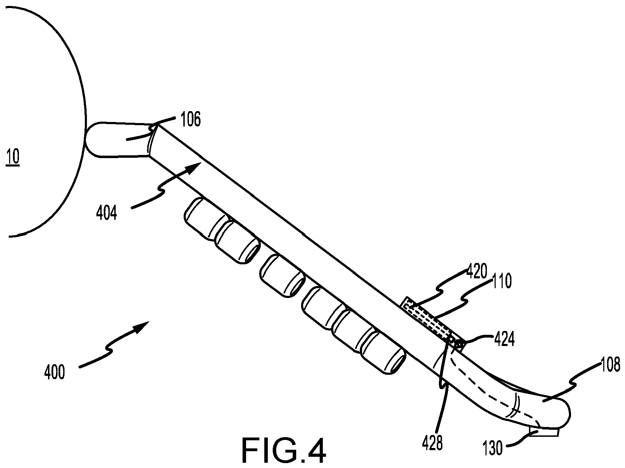

With reference to FIG. 4, a side view of an evacuation system 400 (an example of evacuation system 20 in FIG. 1B) is illustrated, in accordance with various embodiments. Evacuation system 400 may comprise an evacuation slide assembly 404. Evacuation slide assembly 404 may be deployed from an aircraft 10. Evacuation slide assembly 404 may comprise an inflatable slide. Evacuation slide assembly 404 may comprise a head end 106 and a toe end 108 opposite head end 106. Head end 106 may be coupled to an aircraft 10. Upon deployment, toe end 108 may contact an exit surface (e.g., the ground or the water) in response to evacuation slide assembly 404 being deployed. In the event of a water landing, evacuation slide assembly 404 may be uncoupled from the aircraft structure and serve as a life raft.

Evacuation slide assembly 404 may further comprise a raft compartment 110. The raft compartment 110 may be disposed proximate the toe end 108 of the evacuation slide assembly 404. The evacuation slide assembly 404 may further comprise an evacuation raft 420 disposed in the raft compartment 110.

In various embodiments, evacuation system 400 may comprise a raft pressure cylinder 428 coupled to evacuation raft 420 and disposed within raft compartment 110. Evacuation system 400 may further comprise a raft trigger system 424 coupled to raft pressure cylinder 428. Raft trigger system 424 may be coupled to emergency exit door 6, fuselage 12, the raft compartment 110, and/or any other suitable part of an aircraft or evacuation system 100. In various embodiments, raft trigger system 424 may be coupled to evacuation raft 120 and disposed within raft compartment 110. In various embodiments, raft pressure cylinder 428 may be electronically coupled to raft trigger system 424 via a wireless connection. In various embodiments, raft pressure cylinder 428 may be electronically coupled to raft trigger system 424.

The evacuation system 400 may further comprise a sensor 130 disposed proximate toe end 108 of evacuation slide assembly 404. In various embodiments, the sensor 130 may be a water activated sensor, or the like. For example, the sensor 130 may be configured to complete an electrical connection upon becoming submerged in water. The electrical connection may activate raft trigger system 424 and cause the evacuation raft 420 to inflate from a deflated state to an inflated state via the raft pressure cylinder 428.

In various embodiments, the raft trigger system 424 may activate the raft pressure cylinder 428 upon detaching the evacuation slide assembly 404 from the aircraft 10 and inflate from a deflated state to an inflated state. In various embodiments, the raft pressure cylinder 428 may activate on a time delay from detaching the evacuation slide assembly 404 from the aircraft 10 (e.g., a 20 second time delay or a 10 second time delay). In various embodiments, aircraft controls may be in communication with raft trigger system 424, and the raft trigger system 424 may be configured to activate raft pressure cylinder 428 upon a control signal from aircraft controls (e.g., a sensor determines the aircraft is in water and activates raft trigger system 424 in response to determining the aircraft is in water).

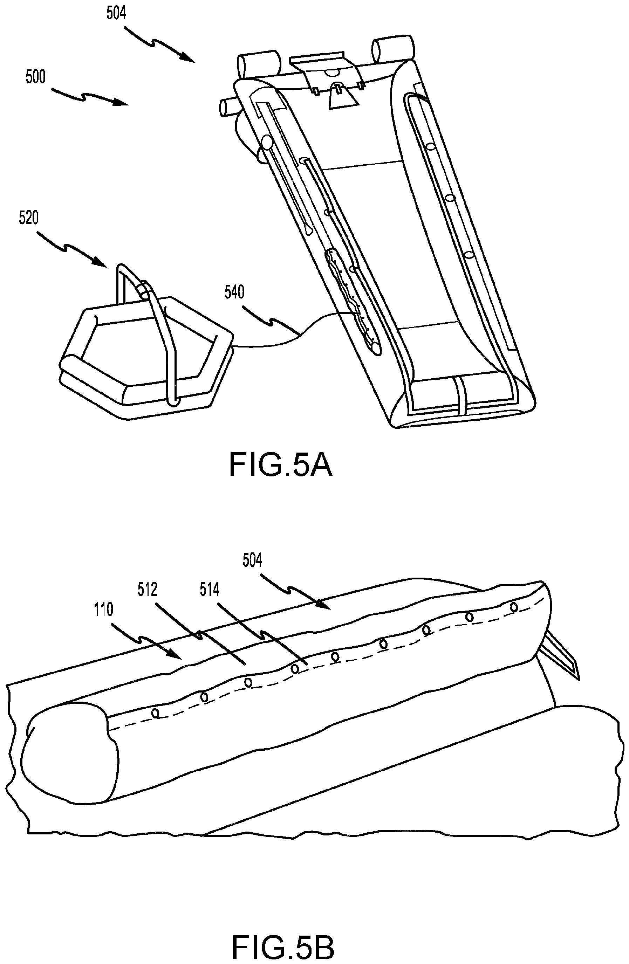

With reference now to FIG. 5A, an evacuation system 500 (e.g., evacuation system 100 or evacuation system 400) in a raft deployed state is illustrated, in accordance with various embodiments. A "raft deployed state" as described herein is when an evacuation raft 520 (e.g., evacuation raft 120 or evacuation raft 420) is in an inflated state. In various embodiments, evacuation raft 520 is coupled to an evacuation slide assembly 504 (e.g., evacuation slide assembly 104 or evacuation slide assembly 404) via a cord 540. In various embodiments, cord 540 may be a rope, a wire, a tether or the like. The cord 540 may ensure that the evacuation raft 520 remains close to the evacuation slide assembly 504 in the event of a water landing. In various embodiments, the deployed evacuation raft 520 is separate, distinct, and/or discrete from the evacuation slide assembly 504.

With reference now to FIG. 5B, a detail perspective view of a raft compartment 110, in accordance with various embodiments, is illustrated. Raft compartment 110 may be coupled to evacuation slide assembly 504 by any method known in the art. For example, raft compartment 510 may be sewn to evacuation slide assembly 504, raft compartment 510 may be bonded to evacuation slide assembly 504, or the like. In various embodiments, raft compartment 110 made of neoprene, urethane fabric, or the like. In various embodiments, raft compartment 110 comprises a hollow pouch 512 extending away from a tube (e.g., first side tube 114, second side tube 116, or center tube 115). In various embodiments, raft compartment 110 further comprises a releasable coupling 514. Releasable coupling 514 may couple a first half of the hollow pouch 512 to a second half of the hollow pouch 512. The releasable coupling 514 may be configured to release upon inflating of an evacuation raft disposed within hollow pouch 512. For example, upon inflation of an evacuation raft, releasable coupling 514 may release and open hollow pouch 512 and the evacuation raft may eject from hollow pouch 512.

Releasable coupling 514 may be any type of releasable coupling known in the art. For example, releasable coupling 514 may be a plurality of snap buttons, a hook and loop fastener, or an interlinked chain fastener configured to unravel upon inflation of an evacuation raft.

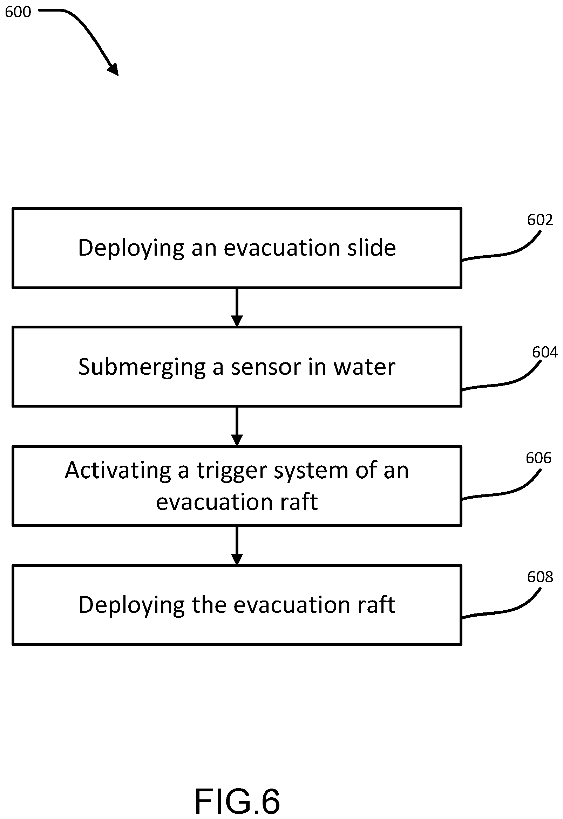

Referring now to FIG. 6, a method 600 of deploying an evacuation raft from an evacuation slide assembly is illustrated, in accordance with various embodiments. The method comprises deploying an evacuation slide assembly from an aircraft (step 602). The evacuation slide assembly may be in accordance with evacuation slide assembly 504. The evacuation slide assembly 504 may be inflated by a pressure cylinder, a reactant packet, or the like. The evacuation slide assembly 504 may comprise a sensor 130 coupled to a toe end 108 of the evacuation slide assembly 504. The method may further comprise submerging the sensor 130 in water (step 604). By submerging the sensor 130 in water, an electrical connection may be completed with a raft trigger system (e.g., raft trigger system 124 or raft trigger system 424). In response to completing the electrical connection, the raft trigger system may be activated. The raft trigger system may be coupled to a reactant packet (e.g., reactant packet 122) or a raft pressure cylinder (e.g., raft pressure cylinder 428).

The method may further comprise deploying the evacuation raft 520 from a raft compartment 110 (step 608). The evacuation raft 520 may be deployed by being inflated (either by activation of reactant packet(s) or a raft pressure cylinder). The evacuation raft 520 may transfer from a deflated state disposed within a raft compartment 110 to an inflated state disposed external to raft compartment 110. In various embodiments, the evacuation raft 520 may remain coupled to evacuation slide assembly 504 after deployment.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An evacuation slide assembly (104), comprising:
an inflatable slide comprising:
a first side tube (114);
a second side tube (116);
a sliding surface (101) disposed between the first side tube and the second side tube and extending from a head end (106) to a toe end (108) of the evacuation slide assembly; and
a raft compartment (110) coupled to the first side tube; and
an evacuation raft (120) disposed within the raft compartment, wherein the evacuation raft is a discrete component from the inflatable slide, and wherein the evacuation raft is configured to deploy adjacent to the inflatable slide.

2. The evacuation slide assembly of claim 1, further comprising a sensor (72) coupled to the toe end of the inflatable slide.

3. The evacuation slide assembly of claim 2, wherein the sensor (72) is configured to complete an electrical connection in response to being submerged in water, the electrical connection configured to inflate the evacuation raft.

4. The evacuation slide assembly of claim 3, further comprising a raft trigger system (124) coupled to the sensor.

5. The evacuation slide assembly of claim 4, wherein the raft trigger system (124) is configured to activate a reactant packet (60) in response to the sensor being submerged in water; or
wherein the raft trigger system (124) is configured to activate a pressure cylinder (428) coupled to the evacuation raft in response to the sensor being submerged in water.

6. The evacuation slide assembly of any preceding claim, wherein the raft compartment (110) comprises a hollow pouch (512) and a releasable attachment mechanism, and wherein the evacuation raft is configured to release the releasable attachment mechanism during inflation.

7. The evacuation slide assembly of any preceding claim, further comprising a cord (540) coupled to the first side tube and the evacuation raft.

8. An aircraft including an evacuation system, the evacuation system comprising:
an inflatable slide comprising a raft compartment (110) and a tube, the raft compartment coupled to the tube; and
an evacuation raft (120) disposed within the raft compartment, wherein the evacuation raft is a discrete component to the inflatable slide, and wherein the evacuation raft is configured to deploy adjacent to the inflatable slide.

9. The evacuation system of claim 8, wherein the raft compartment (110) comprises a hollow pouch (512) and a releasable attachment mechanism.

10. The evacuation system of claim 9, wherein the evacuation raft (120) is configured to release the releasable attachment mechanism during inflation of the evacuation raft and eject from the hollow pouch.

11. The evacuation system of claim 9, further comprising a sensor (72) coupled to a toe end of the inflatable slide, the sensor configured to complete an electrical connection with a raft trigger system (124) in response to the sensor being submerged in water; and
wherein the raft trigger system (124) is configured to activate a reactant packet disposes within the evacuation raft in response to the sensor being submerged in water.

12. The evacuation system of claim 8, further comprising a reactant packet (60) disposed in the evacuation raft; and/or further comprising a raft pressure cylinder (428) coupled to the evacuation raft; and/or further comprising a cord (540), wherein the evacuation raft is coupled to the inflatable slide by the cord.

13. A method of deploying an evacuation raft from an evacuation slide assembly, comprising:
submerging a water activated sensor into water, the water activated sensor coupled to a toe end of the evacuation slide assembly;
activating a raft trigger system in response to submerging the water activated sensor; and
inflating the evacuation raft coupled to the raft trigger system, the evacuation raft disposed in a raft compartment coupled to an inflatable slide of the evacuation slide assembly.

14. The method of claim 13, wherein inflating the evacuation raft further comprises activating a reactant packet disposed within the evacuation raft.

15. The method of claim 13 or 14, wherein inflating the evacuation raft further comprises activating a raft pressure cylinder coupled to the evacuation raft; and
further comprising ejecting the evacuation raft out of the raft compartment.
